# EUROPEAN PATENT SPECIFICATION

(11) **EP 3 607 863 B1**
(45) Date of publication and mention of the grant of the patent: **02.11.2022**
(21) Application number: 19190402.8
(22) Date of filing: 06.08.2019
(51) Int. Cl.: A47L 7/00, A45D 29/00

(54) **DUST COLLECTOR APPARATUS**
STAUBSAMMLER
APPAREIL DE COLLECTE DE POUSSIÈRE

(30) Priority: 06.08.2018 TW 107210745 U
(43) Date of publication of application: 12.02.2020
(73) Proprietor: Cosmex Co. Ltd., 244 New Taipei City (TW)
(72) Inventor: HSIEH, Wan Chieh, 244 New Taipei City (TW); HSIEH, Pai Yao, 244 New Taipei City (TW); TUNG, Chien Chieh, 244 New Taipei City (TW)
(74) Representative: Lang, Christian

(56) References cited:
- CN-U- 201 919 972
- CN-U- 204 048 530
- DE-U1-202014 004 424
- US-A1- 2016 270 609

## Description

### BACKGROUND OF THE INVENTION

### 1. Technical Field

The present invention is related to a dust collector apparatus, in particular, to a dust collector apparatus with a detachable filter and equipped with an airflow guidance function.

### 2. Description of Related Art

In recent years, nail art becomes popular worldwide. Regardless whether it is to modify the original nail color to create natural nail appearance or to decorate nails with accessories and painting of unique colors and shapes for nail beauty, nail art has become an important aspect of fashion and style.

In the process of nail styling, to create the texture of nail or to remove the original nail styling products, such as curing gel etc., it is necessary to perform polishing on the nails. However, during the polishing process, a great amount of powder and dust are generated inevitably. In addition, the powder and dust can be of different particle size, and dust of large particle sizes tends to aggregate together and settle, whereas particles of small particle sizes tends to scatter to the surrounding of the environment, causing dust piling at various areas of the room, such that it can lead to dirty environment and the safety risk of fire or explosion. Furthermore, for nail beauty customers and nail stylists, they can be exposed to hazards of human bodies due to inhaling micro articles of nails or nail styling products in a long term. Accordingly, there is a need for a dust collector apparatus in the nail beauty market for dust collection in order to prevent scattering of dust and powder.

A common conventional dust collector apparatus is to directly suck the dust into the dust collector apparatus during the polishing process, and the dust passes through a turbulence wind turbine to be collected in a dust collection bag or dust collection box. After the dust is collected to a certain amount, it can be cleaned off in order to allow the continuous use of the dust collection bag or dust collection box.

For example, document DE 20 2014 004424 U discloses a dust collector according to the preamble of claim 1. In more detail, it teaches a suction device for manicure tables. The suction device has two suction units being arranged in a box-shaped housing. The two suction units are not directly arranged next to the air inlet opening. Document US 2016/270609 A1 discloses a portable vacuum cleaner, which comprises a dust collector. Document CN 204 048 530 U also discloses a manicure dust collector with anion generator; the anion generator using high voltage to ionize bacteria and mould retained in the nail dust into anions, which decreases pollutants and sustains the cleanness of the working environment for the manicurist.

Presently, there are several dust collector devices in the market capable of collecting dust generated during the nail beauty process; nevertheless, such known dust collector devices use the mechanical parts of wind turbine etc. to generate the airflow suction force in order to directly suck in the airflow with dust into the dust collector devices via the wind turbine. However, such type of design often causes the wind turbine to be jammed with dust and requires periodic cleaning of the wind turbine to prevent malfunction. In addition, they also require the vent-hole of the housing of such dust collector devices for cleaning the dust collector bag or box, such that they can be extremely inconvenient to use. Furthermore, during the running of the wind turbine, heat is generated by the wind turbine, and it can cause odor when it is in contact with the dust, or can even cause the hazard of explosion. Moreover, since the dust generated from nail beauty is often of great amount but light in weight, the dust is likely to scatter outward if the airflow inside the dust collector apparatus is disturbed, such that conventional dust collector devices are of poor dust collection efficiency.

### BRIEF SUMMARY OF THE INVENTION

As above, to solve the problems, the present invention provides a dust collector apparatus according to claim 1, comprising: a housing having one side formed at least one intake vent-hole and another side formed of at least one exhaust vent-hole, an inner side of the housing having an airflow channel formed between the intake vent-hole and the exhaust vent-hole; an airflow generation module, comprising: at least one airflow drawing unit for drawing an airflow in order to form the airflow channel between the intake vent-hole and the exhaust vent-hole, the airflow drawing unit having an intake end for sucking an air and an exhaust end for exhausting the air; a control module electrically connected to the airflow drawing unit, the control module comprising a control board for controlling the airflow drawing unit; a power module electrically connected to the control module; and at least one filter detachably arranged at the intake end and used for filtering dust in the air sucked by the airflow drawing unit. The airflow generation module further comprises an airflow guiding drawing unit correspondingly arranged at the exhaust end of the airflow drawing unit, and the airflow guiding drawing unit includes a guiding curved surface for guiding the airflow

In a preferred embodiment, the housing receives the airflow generation module, and the side end and/or bottom end of the housing is formed of at least one exhaust vent-hole.

In a preferred embodiment, the airflow guiding drawing unit guides the air in the airflow channel into the at least one exhaust vent-hole.

In a preferred embodiment, the dust collector device further comprises a supporting layer installed at the intake end of the airflow guiding drawing unit, and the intake vent-holes are formed thereon; and, the filter is placed between the housing and the supporting layer.

In a preferred embodiment, the filter is a filter selected from a group consisting of an absorption layer, filter layer, sedimentation layer, chemical catalyst layer, photocatalyst layer, electrostatic layer, ionization layer or a combination thereof.

In a preferred embodiment, the housing comprises a positioning member for positioning the filter, and the positioning member comprises a mortise and tenon joint structure, latch structure, locking engagement structure, space restriction structure, magnetic attraction structure, spring structure, elastic sheet structure, screw fastening structure, sensor or a combination thereof.

In a preferred embodiment, the housing further comprises a sterilization lamp, such as UVB LED bulb or UVC LED bulb.

In a preferred embodiment, the housing has a lateral opening at the side end such that the filter is taken from the lateral opening without dissembling the housing.

In a preferred embodiment, the positioning member is a sensor comprising a sensing unit electrically connected to the control module for sensing an installation status of the filter.

In a preferred embodiment, the airflow generation module comprises an operation module electrically connected to the control module and is used to control the state of use of the airflow drawing unit.

In a preferred embodiment, the operation module comprises an operation interface for adjusting a wind speed and switch on/off of the airflow drawing unit.

In a preferred embodiment, the operation interface is an operation key, an operation pedal, an operation bottom, an adjusting knob, a variable resistor, an operation panel, a touch screen or a combination thereof.

In a preferred embodiment, the operation module comprises a display unit selected from a group consisting of a touch-control monitor, display monitor, numerical monitor and indicator lights or a combination thereof.

In a preferred embodiment, the power module comprises any one of an external power port, a one-time battery, a rechargeable battery or a combination thereof.

In a preferred embodiment, a battery compartment is formed by the side end, upper end or bottom end of the housing and the battery compartment comprises a slot opening at the end of the battery compartment, such that the battery is removable from the battery compartment through the slot opening.

In a preferred embodiment, the control module further comprises (a) a detection module and (b) a warning device connected to the detection module; wherein the detection module detects at least one of the following states: (1) a state of use of the filter, such that when the detection module detects the state of use of the filter exceeding or below a threshold value, the detection module transmits a message to the display unit or the warning device in order to display a notice for filter replacement; (2) a state of the airflow generation module, such that when the detection module detects the airflow generation module is not operated normally, the detection module transmits a message to the display unit or the warning device; (3) a state of the power module, such that when the detection module detects the power state for the dust collector apparatus is low, the power module does not properly be connected or abnormal power supply, the detection module transmits a message to the display unit or the warning device.

In a preferred embodiment, the warning device is selected from the group consisting of a buzzer, a loudspeaker and an indicating light.

In a preferred embodiment, the housing comprises an outer cover detachably installed at an external of the intake vent-hole.

In a preferred embodiment, the housing comprises a handle arranged at an outer side of the housing.

In a preferred embodiment, the intake vent-hole of the housing comprises a soft pad arranged at an adjacent side thereof and provided for hand resting thereon.

In a preferred embodiment, the housing comprises at least one footpad arranged at a lower end of the housing.

In a preferred embodiment, the housing comprises at least one stand or the housing has an inclination angle.

In a preferred embodiment, the housing comprises a light diffusing material; and a plurality of light emitting diodes are installed in the inner side of the housing; light emitted by the plurality of light emitting diodes strike a surface of the light diffusing material.

In a preferred embodiment, the dust collector apparatus has a USB output connector electronically connected to the power module.

In a preferred embodiment, the dust collector apparatus has a light unit or further be combined with a nail drill machine.

In a preferred embodiment, the outer surface of the housing has a plurality of holes.

In a preferred embodiment, the dust collector apparatus is embedded in a table.

Comparing to the conventional techniques, the present invention has the following advantages:
1. The dust collector apparatus of the present invention comprises a filter, and such filter can be a composite filter, such as a filter containing photocatalyst, active carbon etc., in order to allow the dust collector apparatus of the present invention to have not only the dust collection function but also the function of deodorization and disinfection on the filtered air, thereby achieving the effect of air purification at the same time.
2. The dust collector apparatus of the present invention further includes an airflow guiding device for guiding the airflow to be exhausted smoothly in order to maintain the internal airflow inside the apparatus to be smooth without disturbance, thereby allowing the dust particles to be properly collected by the filter without secondary scattering.
3. The dust collector apparatus of the present invention can further include a positioning member in order to confirm that the filter is installed at the correct position immediately during the replacement and installation of the filter.

### BRIEF DESCRIPTION OF THE SEVERAL VIEWS OF THE DRAWINGS

FIG. 1 is an outer appearance perspective view of the first embodiment of the present invention.
FIG. 2 is a top exploded view of the first embodiment of the present invention.
FIG. 3 is a bottom exploded view of the first embodiment of the present invention.
FIG. 4 is a top view of the first embodiment of the present invention.
FIG. 5 is an airflow channel view of the first embodiment of the present invention.
FIG. 6 is an outer appearance perspective view of the second embodiment of the present invention.
FIG. 7 is a top view of the second embodiment of the present invention.
FIG. 8 is an airflow channel view of the second embodiment of the present invention.

### DETAILED DESCRIPTION OF THE INVENTION

The details and technical solution of the present invention are hereunder described with reference to accompanying drawings. For illustrative sake, the accompanying drawings are not drawn to scale. The accompanying drawings and the scale thereof are not restrictive of the present invention.

The use of "comprise" means not excluding the presence or addition of one or more other components, steps, operations, or elements to the described components, steps, operations, or elements, respectively. Similarly, "comprise," "comprises," "comprising" "include," "includes," and "including" are interchangeable and not intended to be limiting. As used herein and in the appended claims, the singular forms "a," "an," and "the" include plural referents unless the context dictates otherwise. The terms "a", "an," "the," "one or more," and "at least one," for example, can be used interchangeably herein.

The details and embodiments of the present invention are hereunder described. However, it should be understood that the embodiments are just used to help understand the present invention and are not restrictive of the present invention.

The dust collector apparatus described herein is not limited to the application of nail art, and it can also be used for other purposes requiring air filtering or dust collection, such that the scope of the application for the dust collector apparatus of the present invention is not limited.

### I. First Embodiment

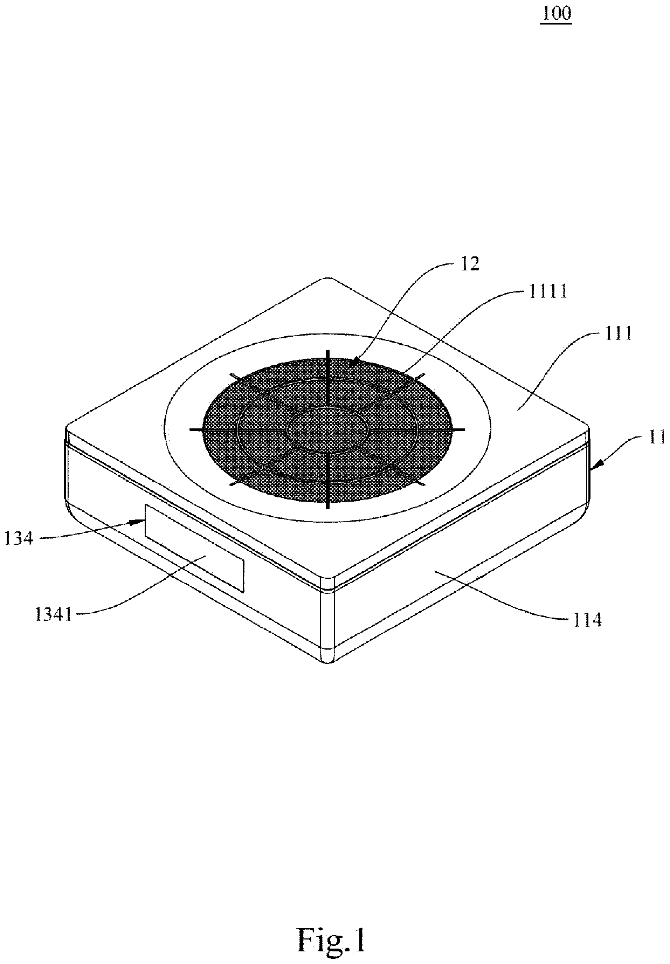

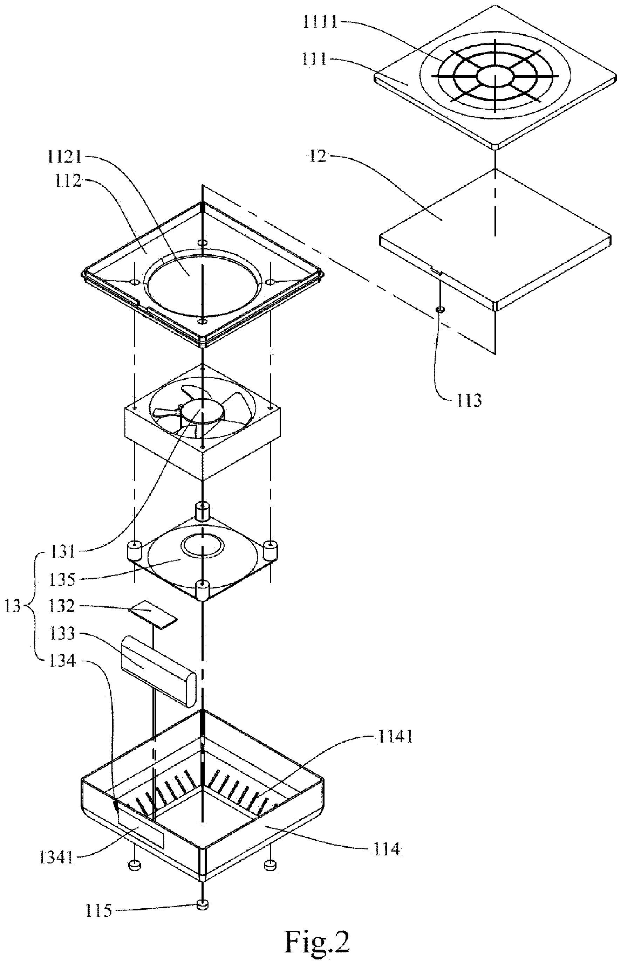

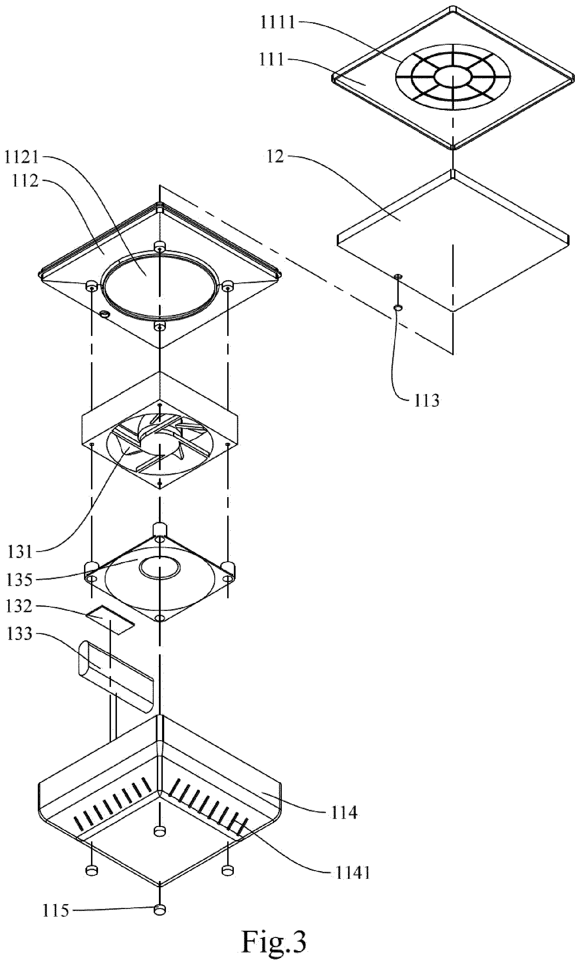

Please refer to FIG. 1 to FIG. 5, showing an outer appearance perspective view, top and bottom exploded views, top view and airflow channel view of a preferred embodiment of a dust collector apparatus 100 of the present invention respectively. As shown in the drawings:

According to a first embodiment of the present invention, the dust collector apparatus 100 comprises: a housing 11, a filter 12 and an airflow generation module 13. The airflow generation module 13 comprises an airflow drawing unit 131, a control module 132 and a power module 133, wherein the airflow drawing unit 131 is used for drawing the airflow in and generating suction power; therefore, it includes an intake end for sucking an air and an exhaust end for exhausting the air. In addition, the number of the airflow drawing unit 131 can be single or plurality according to the user's need.

The housing 11 includes one side formed of at least one intake vent-hole 1111 and another side formed of at least one exhaust vent-hole 1141, and an inner side of the housing 11 includes an airflow channel formed between the intake vent-hole 1111 and the exhaust vent-hole 1141. As an example, the housing 11 can be integrally formed or can comprise an upper cover and a lower cover, or a left cover and a right cover etc.; however, the housing 11 of the present invention is not limited to such configuration only. In this embodiment, the housing 11 comprises an upper cover 111, and a lower cover 114 (as shown in FIG. 1). The dust collector apparatus 100 further comprises a supporting layer 112. The upper cover 111 and the supporting layer 112 are arranged at the intake end, and the intake vent-holes (1111, 1121) are formed thereon. In addition, the filter 12 is placed between the upper cover 111 and the supporting layer 112. The filter 12 can be detachably installed at the location of the intake end. The lower cover 114 is able to receive the airflow generation module 13, and the side end and/or bottom end of the lower cover 114 is formed of at least one exhaust vent-hole 1141.

The filter 12 is used for filtering the dust contained air sucked by the airflow drawing unit 131. In a preferred embodiment, the filter 12 is detachably installed at an inner side of the housing 11 corresponding to the intake vent-holes (1111, 1121). For example, by dissembling the upper cover 111 from the housing 11, the filter 12 can be taken out. In another embodiment, the housing 11 has a lateral opening at the side end (not shown in the drawings) and the filter 12 can be taken from the lateral opening without dissembling the housing 11. For example, the filter 12 has a tag (not shown in the drawings) corresponding to the lateral opening, such that without dissembling the housing 11, a user can pull out the filter 12 from the dust collector apparatus 100 by pulling the tag. Another example is that the housing 11 has a bounce unit such that the filter 12 can be released from the dust collector apparatus 100 without dissembling the housing 11. The filter 12 can be a filter selected from a group consisting of an absorption layer, filter layer, sedimentation layer, chemical catalyst layer, photocatalyst layer, electrostatic layer, ionization layer or a combination thereof. In a preferred embodiment, the filter 12 is a high-efficiency filter (or known as high-efficiency air particle filter). In another preferred embodiment, the filter 12 comprises an absorption layer and a photocatalyst layer, wherein the absorption layer is active carbon. The advantage of this embodiment relies in that the dust collector apparatus 100 of the present invention can be used to filter dust, and the active carbon can also absorb odor particles; in addition, the photocatalyst layer can perform deodorization, disinfection and sterilization etc. on the air. Accordingly, it is able to achieve the effect of air purification during the dust removal. In a preferred embodiment, the housing further comprises a sterilization lamp (not shown in the drawings), and the sterilization lamp emits sterilization lights toward the filter 12. Example of the sterilization lamp includes but not limited to UVB LED bulb or UVC LED bulb. In a preferred embodiment, the filter 12 can be a disposable filter that can be replaced with new ones. In another preferred embodiment, the filter 12 can be removed for cleaning such that it is a reusable type of filter. To facilitate the replacement, cleaning and installation of the filter 12, the housing 11 can include a foolproof means of a position indicator or positioning member 113 etc. in order to prevent the filter 12 from being installed into the dust collector apparatus 100 in an incorrect direction. The term "positioning" described in this content refers to a member for restricting or positioning during the installation of the filter 12 by the user, or a member for facilitating the user to directly or indirectly determine the installation position of the filter 12. The installation position refers to the installation direction, orientation, forward/reverse, location, sequence, angle etc. of the filter 12, but not limited to: shape matching, retention matching, drawing matching, color indication etc. The positioning member 13 can be, such as, but not limited to: mortise and tenon joint structure, latch structure, locking engagement structure, space restriction structure, magnetic attraction structure, spring structure, elastic sheet structure, screw fastening structure, or sensor (such as: pressure sensor, magnetoresistance sensor, optical sensor, infrared sensor) ctc. The foolproof means of the present invention includes any one of the aforementioned position indication means and positioning member 113 etc. or a combination thereof as an example provided for illustration, and the content of the present invention is not limited to any type thereof. In a preferred embodiment, the positioning member 113 comprises a sensing unit electrically connected to the control module 132 and used for sensing an installation status of the filter 12, such as, but not limited to: installation location, installation direction, or the installation sequence of each filter sensed in an embodiment having a plurality of layer of filters. In a preferred embodiment, the positioning member 113 is an optical sensor or an infrared sensor, comprising a sensing unit electrically connected to the control module 132, and it can be installed on the housing 11 or can be installed on the control module 132. The sensing unit comprises a light emitter and a light receiver arranged at two sides corresponding to the filter 12 respectively in order to understand the installation status of the filter 12 based on the optical or infrared receiving status of the sensing unit. In a preferred embodiment, the positioning member 113 is a pressure sensor, comprising a pressure sensing unit electrically connected to the control module 132, wherein the filter 12 is used as a sensed unit. The advantage of the dust collector apparatus 100 of the present invention installed with the filter positioning member 113 relies in that users can immediately understand whether the filter 12 is installed correctly during the installation, such that it can prevent the situation where the filter 12 installation is found to be improper after a period of time of use of the apparatus. Moreover, in an embodiment where a multiple layer of filters are used, the positioning member 113 is preferable to sense the installation sequence of each filter. For example, the positioning member 113 can be an optical sensor, and a specific location on the filter can be designed with a protrusion capable of intercepting light, and a light emitter and a light receiver can be correspondingly arranged at two sides of the filter respectively; therefore, after the filter is installed, the light can be detected to determine whether it is being intercepted, thereby sensing whether the filter is installed improperly, causing the installation sequence of the multiple layers of filters to be incorrect etc. However, it can be understood that the means adopted by the positioning member 113 to sense the installation sequence of each filter in the present invention is not limited to such configuration only. The installation method described is mainly based on the consideration that each layer of filter may have different function: (such as: particle filter, photocatalyst sterilization, and odor absorption etc.), and the arrangement sequence of filters of different functions can affect the outcome of air purification. Consequently, by maintaining the installation correctness of sequence, direction and forward/reverse of the filters, the multiple layers of filters are able to achieve the maximum effect and to prolong the useful lifetime of the filters.

The housing 11 can further comprise a soft pad (not shown in the drawings), at least one footpad 115, at least one stand (not shown in the drawings), an outer cover (not shown in the drawings) and/or a handle (not shown in the drawings). The soft pad (not shown in the drawings) is preferably arranged at an adjacent side of the intake vent-hole 1111 in order to allow the user to rest his or her hand thereon during the nail polishing process, thereby improving the comfort of the dust collector apparatus 100 of the present invention. The footpad 115 is arranged at a lower end of the housing 11, and it is preferably of the anti-slip effect, in order to allow the dust collector apparatus 100 to be placed on any type of platforms for operation. The installation of the footpad 115 is able to elevate the dust collector apparatus 100 in order to prevent it from direct contact with the platform surface of desktop, thereby reducing noise generated during the running of the airflow generation module 13; in addition, in an embodiment where the exhaust vent-hole 1141 is installed at the bottom end of the housing 11, it is able to facilitate the airflow to be exhausted smoothly. The stand (not shown in the drawings) is arranged on the housing in order to allow the housing to be at a particular angle or height when the housing is placed vertically, thereby allowing the user to perform most optimal arrangement of the dust collector apparatus according to different operations. Another embodiment is that the housing does not comprise the stand, but the housing itself has an inclination angle, such that the housing is at a particular angle or height. The outer cover (not shown in the drawings) can be detachably installed at an external of the intake vent-hole 1111. When the dust collector apparatus 100 is not in use, the outer cover can be installed at the external of the intake vent-hole 1111 to prevent dust; in addition, it can also prevent the filter 12 from unnecessary consumption due to absorbing particles or catalyst etc. The handle (not shown in the drawings) can be arranged at an outer side of the housing 11 in order to allow the user to use hand to grip or to move the dust collector apparatus. The handle can be rotating handle or a fixed handle. In a preferred embodiment, the handle adopts a detachable means to be attached onto the housing 1 1 or it is integrally formed with the housing 11; wherein the detachable means includes but not limited to: latch structure, mortise and tenon joint structure or screw fastening structure etc., and the present invention is not limited to any configuration thereof.

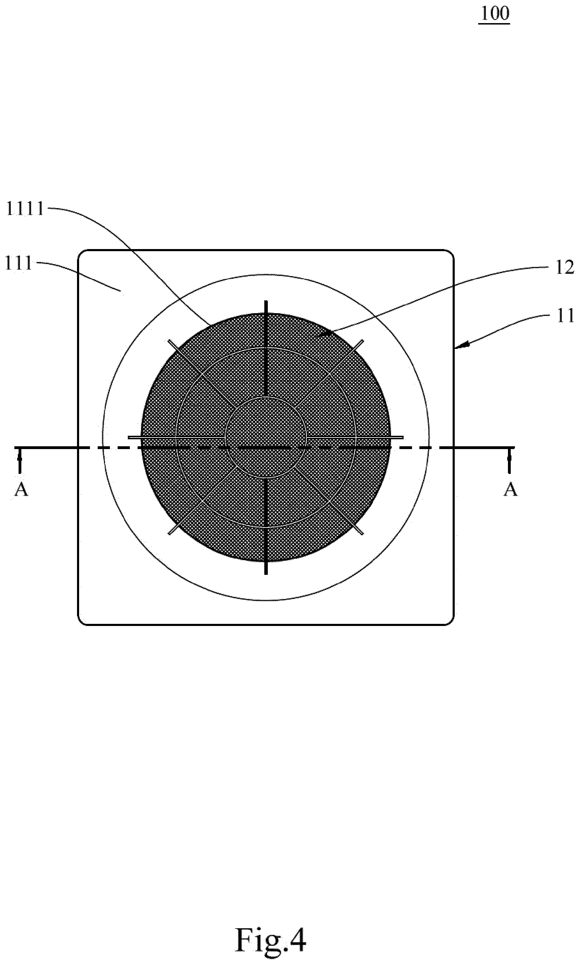

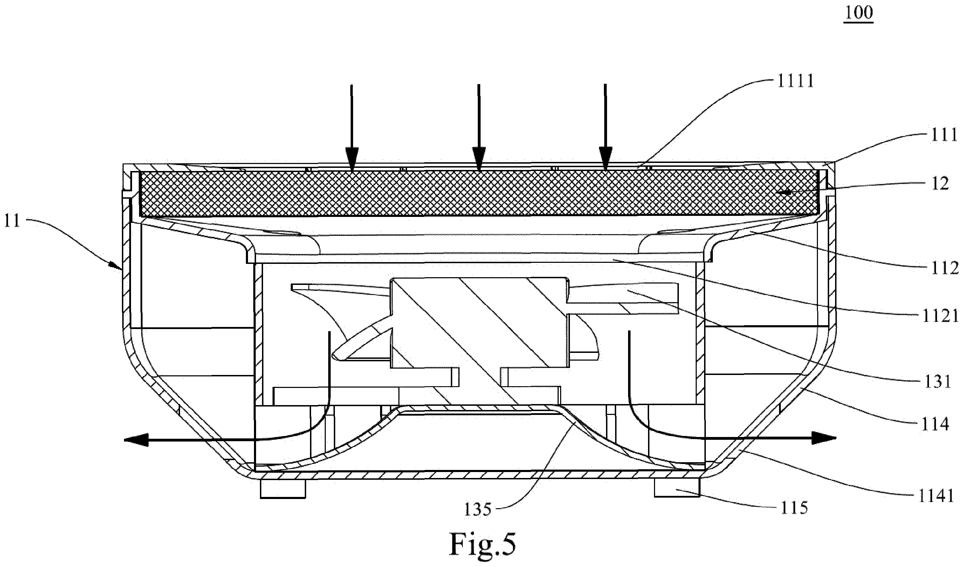

The airflow drawing unit 131 is used for drawing the airflow in, thereby generating the airflow channel between the intake vent-hole (1111, 1121) and the exhaust vent-hole 1141. The airflow drawing unit 131 can be a mechanism, device, component part or a combination thereof equipped with the function of airflow drawing, and examples of such unit include but not limited to: a centrifugal fan (such as: multi-blade type, turbine-type, radial type, air foil type), axial flow fan, diagonal flow fan, cross flow fan, air multiplier etc. In this embodiment, the airflow drawing unit 131 of the dust collector apparatus 100 is an axial flow fan, and the airflow generated flows perpendicular to the blade wheel, and its advantage relies in that the air volume generated is large. The airflow generation module 13 of the dust collector apparatus 100 of the present invention comprises an airflow guiding drawing unit 135, and the airflow guiding drawing unit 135 can include one or multiple types of fading surfaces in order to form a guiding curved surface for guiding the airflow. The airflow guiding drawing unit 135 is arranged corresponding to the exhaust end of the airflow drawing unit 131. Furthermore, according to different air flowing methods of the airflow drawing unit 131, the airflow guiding drawing unit 135 can be correspondingly arranged at different locations of the exhaust end of the airflow drawing unit 131. In this embodiment, the airflow generation module 13 of the dust collector apparatus 100 of the present invention comprises an airflow guiding drawing unit 135 arranged corresponding to an exhaust end of the airflow drawing unit 131. The center of the airflow guiding drawing unit 135 is aligned or generally aligned with the central location of the airflow drawing unit 131, and a guiding curved surface is formed to extend and retract from the center toward the direction of the outer perimeter. FIG. 4 shows a top view of this embodiment, and the airflow channel of the present invention can be understood from the A-A cross section in the drawing (i.e. FIG. 5). The arrows in FIG. 5 indicate the air flowing direction, and the airflow generation module 13 of the present invention uses the airflow drawing unit 131 to generate the drawing force during the operation thereof, thereby allowing the external air containing dust to contact with the filter 12. The filter 12 then retains the dust particles and allows the air to pass through. After the air passes through the airflow drawing unit 131, it contacts with the airflow guiding drawing unit 135. Since the airflow guiding drawing unit 135 has a smooth curved surface design, it is able to smoothly guide the air to the at least one exhaust vent-hole 1141 of the housing 11. Consequently, it is able to achieve a smooth airflow channel.

The control module 132 is electrically connected to the airflow drawing unit 131, and it comprises a control board for controlling the airflow drawing unit 131. The control module 132 can also be installed inside the housing 11.

The power module 133 is electrically connected to the control module 132. The power module 133 can be any one of an external power port or a battery or a combination thereof; wherein the battery can be a one-time battery or a rechargeable battery. In a preferred embodiment, the dust collector apparatus 100 has a USB inputport, which can be used to power the dust collector apparatus 100 using a wall adapter, car charger, laptop USB port, or mobile power bank for ultimate portability. In a preferred embodiment, the power module 133 comprises any one of an external power port, a one-time battery, a rechargeable battery or a combination thereof. In addition, a battery compartment (not shown in the drawings) is formed by the side end, upper end or bottom end of the housing 11, and the battery compartment comprises a slot opening at the end of the battery compartment. Therefore, the battery is removable from the battery compartment through the slot opening without disassembling the housing 11 from the dust collector apparatus 100.

The airflow generation module 13 can further comprise an operation module 134. The operation module 134 is electrically connected to the control module 132 and is used to control the connection or the state of use of the airflow drawing unit 131; in addition, it can further comprise an operation interface for adjusting a wind speed and switch on/off of the airflow drawing unit 131 or a display unit 1341 for displaying operation commands, status information or battery level etc. The operation interface and the display unit 1341 are preferably installed on the housing 11. The operation interface can be, such as, but not limited to: any one of an operation key, operation pedal, operation button, adjusting knob, variable resistor, operation panel, touch screen or a combination thereof. The display unit 1341 can be, such as, but not limited to: any one selected from a group consisting of a touch-control monitor, display monitor, numerical monitor and indicator lights or a combination thereof.

Furthermore, the control module 132 of the present invention can selectively comprise a detection module and a warning device connected to the detection module (not shown in the drawings); examples of the detection module include but not limited to a buzzer, a loudspeaker and an indicating light. The detection module is electrically connected to the control module 132 and the display unit 1341. The detection module refers to an element combination capable of directly or indirectly obtaining the state of use of the filter 12, and/or the airflow generation module 13, and/ or the power module 133, which can comprise hardware or software, or can be further integrated with auxiliary parts. The hardware can comprise, such as, at least one sensor, microprocessor for data processing and other relevant elements (such as: signal amplifier, communication element, power element unit). The software can comprise, such as, data collection or characteristic obtaining software, signal amplification software, data algorithm analysis software etc. The present invention shall not be limited to any of the aforementioned hardware, software and auxiliary parts of the detection module. In an embodiment, the detection module of the dust collector apparatus 100 of the present invention is used to detect an air quality of the air sucked in by the dust collector apparatus 100 and/or an air quality of the air exhausted thereby, such as: substances of PM10, PM2.5, volatile organic compounds (VOC), CO₂, CO etc. Therefore, the detection module comprises at least one sensor (such as: PM10 sensor, PM2.5 sensor, VOC sensor, CO₂ sensor, CO sensor etc.) corresponding to the targeted detection substances as well as a microprocessor communicated or electrically connected to the sensor. The microprocessor converts the signals obtained from the aforementioned sensor and transmits to the display unit 1341 in order to indicate or display the air quality result via the display monitor or display lights etc. In addition, the microprocessor can be pre-stored with an air quality threshold value, such that when the air quality score obtained from the sensor and converted by the microprocessor is below the threshold value, the microprocessor can indicate or display the state for replacement of the filter on the display monitor or display light of the display unit 1341. Furthermore, when it is used in an embodiment with a plurality of layers of filters 12, the microprocessor can be pre-stored with a plurality of quality threshold values of the targeted air detected substances, such that when the individual air quality score obtained by the sensor and converted by the microprocessor is below the threshold value, the microprocessor can indicate or display the state for replacement of the individual filter 12 on the display monitor or display light of the display unit 1341 or the warning device can generate warning signal to a user. In an embodiment, the detection module of the dust collector apparatus 100 of the present invention is used to detect the accumulated usage time of the filter 12 of the dust collector apparatus 100, for example, the detection module comprises a sensor, a timer with the time accumulation function and a microprocessor. In addition, the filter 12 is installed with an element for detection, and such element for detection is preferably a label (such as RFID) with a serial number for the identification by the sensor wirelessly. During the operation of the dust collector apparatus 100, the sensor detects the element for detection on the filter and also activates the timer to perform the accumulation of the running time. The microprocessor can be pre-stored with an accumulated usage time threshold value, such that when the accumulated usage time of the element for detection (i.e. the filter 12) obtained by the microprocessor has exceeded the threshold value, the microprocessor is able to indicate or display the state for replacement of the filter on the display monitor or display light of the display unit 1341. In another embodiment, the detection module of the dust collector apparatus 100 of the present invention is used to detect whether the airflow generation module 13 is operated normally. For example, if the airflow generation module 13 cannot generate airflow, the generated airflow does not meet the wind speed controlled by the control module 132 or any foreign material being stuck into the airflow drawing unit 131, the detection module transmits a message to the display unit 1341 or the warning device. In another embodiment, the detection module of the dust collector apparatus 100 of the present invention is used to detect the power status of the dust collector apparatus 100. For example, if the detection module detects the power state for the dust collector apparatus 100 is low, the battery is dead, or the external power port is not plugged in or the battery is not placed in the right position, the detection module transmits a message to the display unit 1341 or the warning device.

### II. Second Embodiment

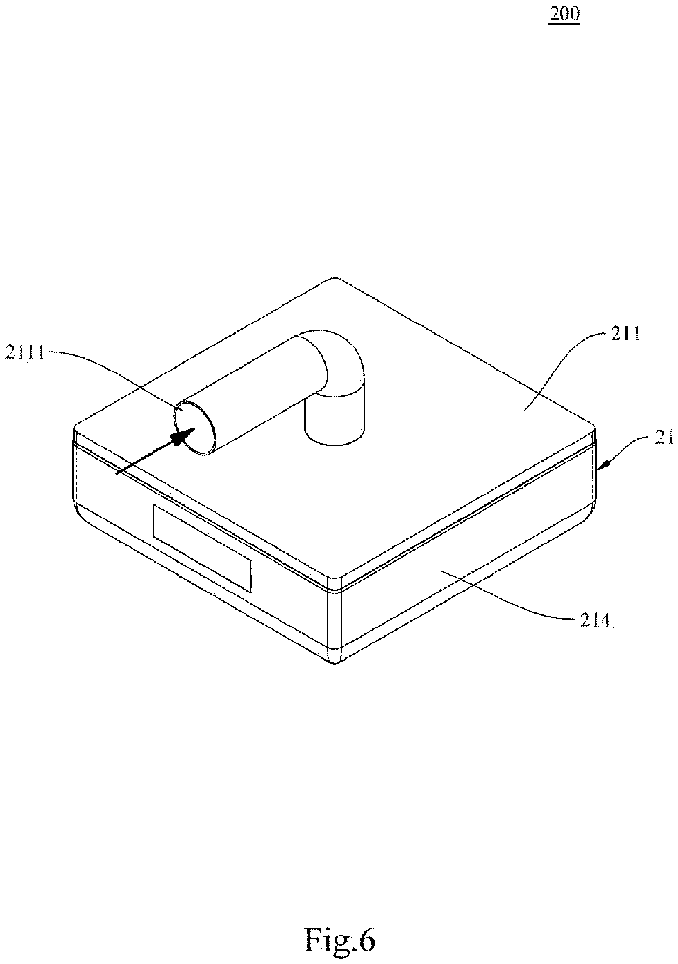

Please refer to FIG. 6 to FIG. 8, showing an outer appearance perspective view, top view, airflow channel view of a second embodiment of the dust collector apparatus 200 of the present invention. As shown in the drawings:

In the second embodiment of the present invention, the dust collector apparatus 200 of the present invention comprises: a housing 21, a filter 22 and an airflow generation module 23; wherein the airflow generation module 23 is used for generating a suction force; therefore, it includes an intake end and an exhaust end.

The housing 21 comprises a top cover 211, and a lower cover 214. The dust collector apparatus 200 further comprises a supporting layer 212 and the top cover 211 and the supporting layer 212 are arranged at the intake end and are formed of an intake vent-hole (2111, 2121) thereon. In addition, the filter 22 is placed between the top cover 211 and the supporting layer 212. The filter 22 is arranged at an location corresponding to the location of the intake end of the airflow generation module 23. The lower cover 214 is able to receive the airflow generation module 23, and the lower cover 214 includes a plurality of exhaust vent-holes 2141 at the side end. The inner side of the housing 21 includes an airflow channel.

The difference between the second embodiment and the first embodiment relies in that the housing 21 includes a tubular intake vent-hole 2111. In a preferred embodiment, the aforementioned tubular intake vent-hole is formed directly from the housing. In a preferred embodiment, the aforementioned tubular intake vent-hole is formed by a tube installed at the intake vent-hole of the housing (such as the intake vent-hole of the top cover in the first embodiment with an additional installation of a tube in order to form the configuration of the second embodiment). In a preferred embodiment, the aforementioned tubular intake vent-hole is formed by a cover member with a tubular intake vent-hole installed directly onto the external of the intake vent-hole of the housing (such as the outer side of the top cover in the first embodiment with an additional installation of a cover member with a tubular intake vent-hole in order to form the configuration of the second embodiment). The aforementioned tubular intake vent-hole can be a fixed type, and preferably to be an adjustable type, such as, but not limited to: flexible, extendable or rotatable type of adjustment methods. In addition, it can be added with a plurality of movable positioning sections (such as ball joint or flexible coil) in order to allow the user to adjust the orientation and height of the tubular intake vent-hole 2111. In a preferred embodiment, the tubular intake vent-hole 2111 of the dust collector apparatus 200 is a coil, plastic or rubber wrapped flexible metal tubular member, a plastic tube with proper supporting force, or other materials or structures capable of allowing the tubular intake vent-hole 2111 to be bent or rotated in any direction or angle, such that the flexibility of the use of the dust collector apparatus 200 of the present invention is increased. Except for the above, the rest of the configuration of the dust collector apparatus 200 is identical to the configuration of the first embodiment.

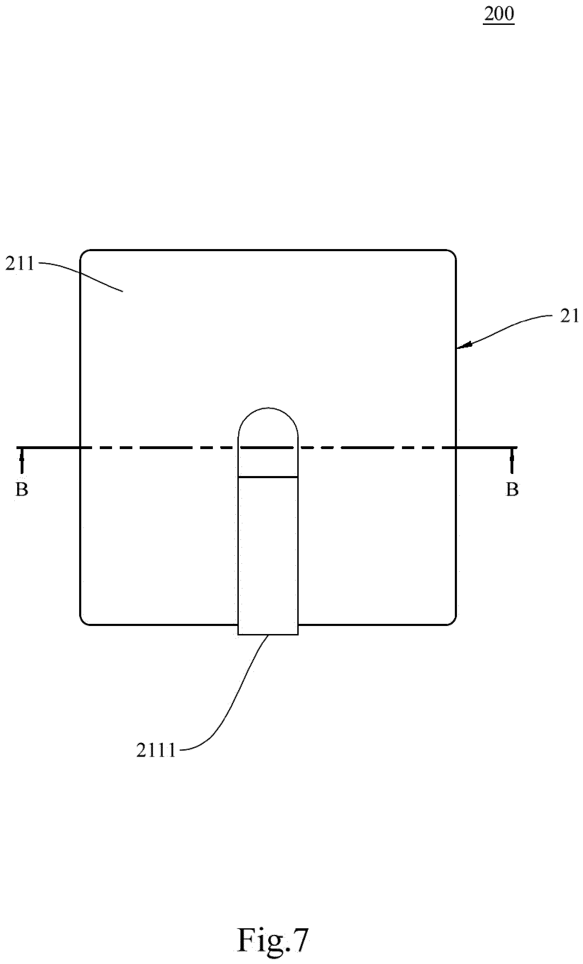

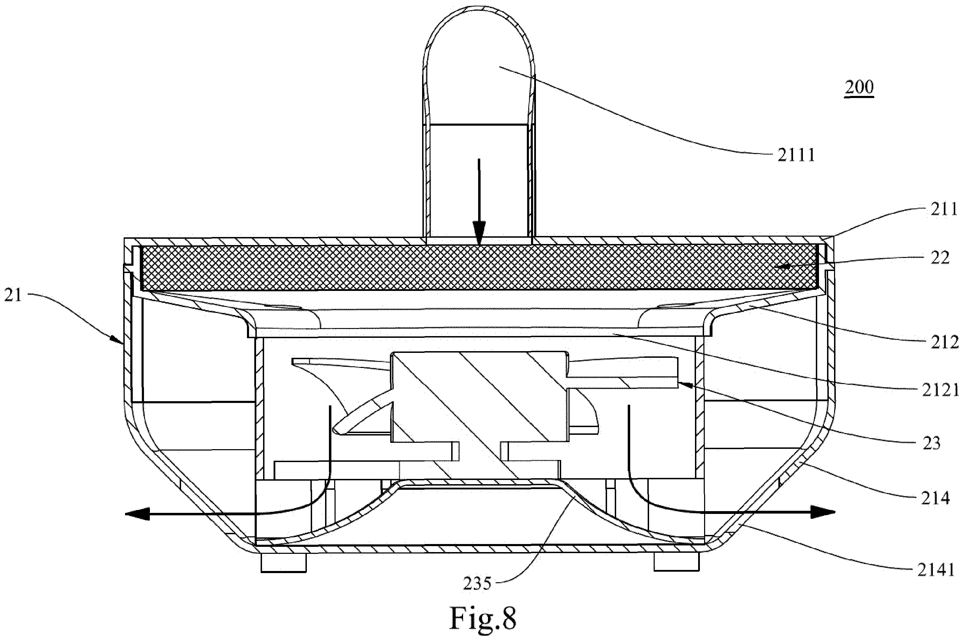

FIG. 7 is a top view of this embodiment, and the airflow channel (i.e. FIG. 8) of the present invention can be understood from the cross section of B-B in the drawing. The arrows shown in FIG. 6 and FIG. 8 present the air flowing direction. The airflow generation module 23 uses the airflow drawing unit to generate a suction force in order to allow the air containing dust to enter into the dust collector apparatus 200 via the tubular intake vent-hole 2111 at the adjacent side and to contact with the filter 22. The filter 22 then retains the dust particles therein and allows the air to pass through. After the air with the removal of dust passes through the airflow drawing unit, the air then contacts with the airflow guiding drawing unit 235. The airflow guiding drawing unit 235 guides the air with the removal of dust into the at least one exhaust vent-hole 2141 of the housing 21, such that a smooth airflow channel is achieved. The advantage of the second embodiment relies in that the tubular intake vent-hole 2111 is able to further centralize the dust collection target for collection, and it allows the user to adjust the location of the intake vent-hole 2111 according to the user's needs, such that the use convenience of the dust collector apparatus 200 is increased.

III. Other embodiments of the dust collector apparatus (not shown in the drawings). The other embodiments of the dust collector apparatus not only include the above mentioned characteristics, but also have the following features. For example, in an embodiment, the housing comprises a light diffusing material and a plurality of light emitting diodes is installed in the inner side of the housing. Because the light diffusing property is present on the housing, when light from the light emitting diodes, the light diffusing material scatters the light across the surface area of the housing, causing a more even glow across the entire housing of the dust collector apparatus.

A further embodiment of the dust collector apparatus includes one or more USB output connectors connected to the power module. These connectors can be used to charge or transmit data from a user's or customer's device, such as a phone or laptop. The user or customer will connect their device (e.g., phone) via a cable to one USB output connectors and the device will be charged from the power from the power module. If the USB power input is connected to power, this power is used to charge the user's device (and also the rechargeable battery of dust collector apparatus). When the USB power input is not connected to power, the user's device is charged by the battery of the dust collector apparatus. A light unit can also be detachably installed on dust collector apparatus via the USB output connectors according to the user's needs. A nail drill machine can also be detachably installed on dust collector apparatus via the USB output connectors according to the user's needs such that the apparatus can be formed as a "two-in-one" dust collector with nail drilling function. In an embodiment, he light unit or the nail drill machine can be an external part of the dust collector apparatus. A further embodiment of the dust collector apparatus is that the outer surface of the housing has a plurality of holes, such that manicure-related tools can be places into the holes. Examples of the manicure-related tools include but not limited to nail bit, brush, and the like.

Another embodiment is that the dust collector apparatus is embedded in a table. For example, the table includes a planar upper surface having a recess, and the dust collector apparatus is embedded in the recess. The table further includes a cover so that if the dust collector apparatus is not being used, the cover can cover the recess without exposing the dust collector apparatus so that the whole upper surface of the table remains planar.

To sum up, the dust collector apparatus of the present invention can comprise a filter, and such filter can be a composite filter, such as a filter containing photocatalyst, active carbon etc., in order to allow the dust collector apparatus of the present invention to have not only the dust collection function but also the function of deodorization and disinfection on the filtered air, thereby achieving the effect of air purification at the same time. In addition, the dust collector apparatus of the present invention can further include an airflow guiding device for guiding the airflow to be exhausted smoothly in order to maintain the internal airflow inside the apparatus to be smooth without disturbance, thereby allowing the dust particles to be properly collected by the filter without secondary scattering. Furthermore, the dust collector apparatus of the present invention can further include a positioning member in order to confirm that the filter is installed at the correct position immediately during the replacement and installation of the filter.

The above is the detailed description of the present invention. However, the above is merely the preferred embodiment of the present invention and cannot be the limitation to the implement scope of the present invention, which means the variation and modification according to the present invention may still fall into the scope of the invention.

## Claims

1. A dust collector apparatus (100), comprising:
a housing (11), having one side formed at least one intake vent-hole (1111) and another side formed of at least one exhaust vent-hole (1141), an inner side of the housing (11) having an airflow channel formed between the intake vent-hole (1111) and the exhaust vent-hole (1141);
an airflow generation module (13), comprising:
at least one airflow drawing unit (131) for drawing an airflow in order to form the airflow channel between the intake vent-hole (1111) and the exhaust vent-hole (1141), the airflow drawing unit (131) having an intake end for sucking an air and an exhaust end for exhausting the air;
a control module (132) electrically connected to the airflow drawing unit (131), the control module (132) comprising a control board for controlling the airflow drawing unit (131); and
a power module (133) electrically connected to the control module (132);and at least one filter (12) detachably arranged at the intake end and used for filtering dust in the air sucked by the airflow drawing unit (131);
**characterized in that**
the airflow generation module (13) further comprises an airflow guiding drawing unit (135) correspondingly arranged at the exhaust end of the airflow drawing unit (131), wherein the airflow guiding drawing unit (135) includes a guiding curved surface for guiding the airflow.

2. The dust collector apparatus according to Claim 1,wherein the housing (11) receives the airflow generation module (13), and the side end and/or bottom end of the housing (11) is formed of at least one exhaust vent-hole (1141).

3. The dust collector apparatus (100) according to Claim 1, wherein the airflow guiding drawing unit (135) guides the air in the airflow channel into the at least one exhaust vent-hole (1141).

4. The dust collector apparatus (100) according to Claim 1, which further comprises a supporting layer (112) installed at the intake end of the airflow guiding drawing unit (135), and the intake vent-holes (1111, 1121) are formed thereon; and, the filter (12) is placed between the housing (11) and the supporting layer (112).

5. The dust collector apparatus (100) according to Claim 4, wherein the filter (12) is a filter selected from a group consisting of an absorption layer, filter layer, sedimentation layer, chemical catalyst layer, photocatalyst layer, electrostatic layer, ionization layer or a combination thereof.

6. The dust collector apparatus (100) according to Claim 5, wherein the housing (11) comprises a positioning member (113) for positioning the filter (12), and the positioning member (113) comprises a mortise and tenon joint structure, latch structure, locking engagement structure, space restriction structure, magnetic attraction structure, spring structure, elastic sheet structure, screw fastening structure, sensor or a combination thereof, and / or
wherein the housing (11) further comprises a sterilization lamp, especially an UVB LED bulb or UVC LED bulb.

7. The dust collector apparatus (100) according to Claim 6, wherein the housing (11) has a lateral opening at the side end such that the filter (12) is taken from the lateral opening without dissembling the housing (11) and / or wherein the positioning member (113) is a sensor comprising a sensing unit electrically connected to the control module (132) for sensing an installation status of the filter (12).

8. The dust collector apparatus (100) according to Claim 6, wherein the airflow generation module (13) comprises an operation module (134) electrically connected to the control module (132) and is used to control the state of use of the airflow drawing unit (131).

9. The dust collector apparatus (100) according to Claim 8, wherein the operation module (134) comprises an operation interface for adjusting a wind speed and switch on/off of the airflow drawing unit (131), wherein the operation interface preferably is an operation key, an operation pedal, an operation bottom, an adjusting knob, a variable resistor, an operation panel, a touch screen or a combination thereof, and / or wherein the operation module (134) comprises a display unit (1341) selected from a group consisting of touch-control monitor, display monitor, numerical monitor and indicator lights or a combination thereof.

10. The dust collector apparatus (100) according to Claim 1, wherein the power module (133) comprises any one of an external power port, a one-time battery, a rechargeable battery or a combination thereof, and / or
wherein a battery compartment is formed by the side end, upper end or bottom end of the housing (11), and the battery compartment comprises a slot opening at the end of the battery compartment, such that the battery is removable from the battery compartment through the slot opening.

11. The dust collector apparatus (100) according to Claim 8, wherein the control module (132) further comprises (a) a detection module and (b) a warning device connected to the detection module; wherein the detection module detects at least one of the following states:
(1) a state of use of the filter (12), such that when the detection module detects the state of use of the filter (12) exceeding or below a threshold value, the detection module transmits a message to the display unit (1341) or the warning device in order to display a notice for filter replacement;
(2) a state of the airflow generation module (13), such that when the detection module detects the airflow generation module (13) is not operated normally, the detection module transmits a message to the display unit (1341) or the warning device;
(3) a state of the power module (133), such that when the detection module detects the power state for the dust collector apparatus (100) is low, the power module (133) does not properly be connected or abnormal power supply, the detection module transmits a message to the display unit (1341) or the warning device.

12. The dust collector apparatus (100) according to Claim 11, wherein the warning device is selected from the group consisting of a buzzer, a loudspeaker and an indicating light.

13. The dust collector apparatus (100) according to Claim 1, wherein the housing (11) comprises an outer cover detachably installed at an external of the intake vent-hole (1111) and / or wherein the housing (11) comprises a handle arranged at an outer side of the housing (11).

14. The dust collector apparatus (100) according to Claim 1, wherein the intake vent-hole (1111) of the housing (11) comprises a soft pad arranged at an adjacent side thereof and provided for hand resting thereon.

15. The dust collector apparatus (100) according to Claim 1, wherein the housing (11) comprises at least one footpad (115) arranged at a lower end of the housing (11) and / or
wherein the housing (11) comprises at least one stand or the housing (11) has an inclination angle.

16. The dust collector apparatus (100) according to Claim 1, wherein the housing (11), comprises a light diffusing material; and a plurality of light emitting diodes are installed in the inner side of the housing (11); light emitted by the plurality of light emitting diodes striking a surface of the light diffusing material.

17. The dust collector apparatus (100) according to Claim 1, which further has an USB output connector electronically connected to the power module (133) and / or
has a light unit or further be combined with a nail drill machine, and / or
wherein outer surface of the housing (11) has a plurality of holes and / or
the dust collector apparatus (100) is embedded in a table.

## Patentansprüche

1. Staubsammelvorrichtung (100), umfassend:
ein Gehäuse (11), das auf einer Seite mindestens einer Einlassöffnung (1111) und auf der anderen Seite mindestens eine Auslassöffnung (1141) aufweist, wobei eine Innenseite des Gehäuses (11) einen Luftströmungskanal aufweist, der zwischen der Einlassöffnung (1111) und der Auslassöffnung (1141) ausgebildet ist;
ein Luftstromerzeugungsmodul (13), umfassend:
mindestens eine Luftstromsaugeinheit (131) zum Ziehen eines Luftstroms, um den Luftstromkanal zwischen der Einlassöffnung (1111) und der Auslassöffnung (1141) zu bilden, wobei die Luftstromsaugeinheit (131) ein Einlassende zum Ansaugen von Luft und ein Auslassende zum Ausstoßen der Luft aufweist;
ein Steuermodul (132), das elektrisch mit der Luftstromsaugeinheit (131) verbunden ist, wobei das Steuermodul (132) eine Steuerplatine zur Steuerung der Luftstromsaugeinheit (131) umfasst; und
ein Leistungsmodul (133), das elektrisch mit dem Steuermodul (132) verbunden ist; und
mindestens einen Filter (12), der abnehmbar am Ansaugende angeordnet ist und zum Filtern von Staub in der von der Luftstromsaugeinheit (131) angesaugten Luft verwendet wird;
**dadurch gekennzeichnet, dass**
das Luftstromerzeugungsmodul (13) ferner eine Luftstromführungssaugeinheit (135) umfasst, die entsprechend am Auslassende der Luftstromsaugeinheit (131) angeordnet ist, wobei die Luftstromführungssaugeinheit (135) eine gekrümmte Führungsfläche zum Führen des Luftstroms aufweist.

2. Staubsammelvorrichtung nach Anspruch 1, bei welcher das Gehäuse (11) das Luftstromerzeugungsmodul (13) aufnimmt und das seitliche Ende und/oder das untere Ende des Gehäuses (11) von mindestens einer Auslassöffnung (1141) gebildet wird.

3. Staubsammelvorrichtung (100) nach Anspruch 1, bei welcher die Luftstromführungssaugeinheit (135) die Luft im Luftstromkanal in die mindestens eine Auslassöffnung (1141) leitet.

4. Staubsammelvorrichtung (100) nach Anspruch 1, die ferner eine Stützschicht (112) umfasst, die am Einlassende der Luftstromführungssaugeinheit (135) installiert ist und wobei die Einlassöffnungen (1111, 1121) darauf ausgebildet sind und wobei der Filter (12) zwischen dem Gehäuse (11) und der Stützschicht (112) angeordnet ist.

5. Staubsammelvorrichtung (100) nach Anspruch 4, bei welcher der Filter (12) ein Filter ist, der aus einer Gruppe ausgewählt ist, die aus einer Absorptionsschicht, einer Filterschicht, einer Sedimentationsschicht, einer chemischen Katalysatorschicht, einer Photokatalysatorschicht, einer elektrostatischen Schicht, einer lonisierungsschicht oder einer Kombination davon besteht.

6. Staubsammelvorrichtung (100) nach Anspruch 5, bei welcher das Gehäuse (11) ein Positionierelement (113) zum Positionieren des Filters (12) umfasst, und das Positionierelement (113) eine Zapfenverbindung, eine Riegelstruktur, eine Verriegelungseingriffsstruktur, eine Raumeinschränkungsstruktur, eine magnetische Anziehungsstruktur, eine Federstruktur, eine elastische Blattstruktur, eine Schraubbefestigungsstruktur, einen Sensor oder eine Kombination davon umfasst, und/oder
das Gehäuse (11) ferner eine Sterilisationslampe, insbesondere eine UVB - LED - Lampe oder eine UVC - LED - Lampe, umfasst.

7. Staubsammelvorrichtung (100) nach Anspruch 6, bei welcher das Gehäuse (11) am seitlichen Ende eine seitliche Öffnung aufweist, so dass der Filter (12) aus der seitlichen Öffnung entnommen werden kann, ohne das Gehäuse (11) zu demontieren, und/oder wobei das Positionierelement (113) ein Sensor ist, der eine mit dem Steuermodul (132) elektrisch verbundene Abtasteinheit zum Abtasten eines Installationsstatus des Filters (12) umfasst.

8. Staubsammelvorrichtung (100) nach Anspruch 6, bei welcher das Luftstromerzeugungsmodul (13) ein Betriebsmodul (134) umfasst, das elektrisch mit dem Steuermodul (132) verbunden ist und zur Steuerung des Betriebszustands der Luftstromsaugeinheit (131) verwendet wird.

9. Staubsammelvorrichtung (100) nach Anspruch 8, bei welcher das Betriebsmodul (134) eine Bedienschnittstelle zum Einstellen einer Windgeschwindigkeit und zum Ein-/Ausschalten der Luftstromsaugeinheit (131) umfasst, wobei die Bedienschnittstelle vorzugsweise eine Bedientaste, ein Bedienpedal, ein Bedienboden, ein Einstellknopf, ein variabler Widerstand, ein Bedienfeld, ein Berührungsbildschirm oder eine Kombination davon ist, und/oder
wobei das Betriebsmodul (134) eine Anzeigeeinheit (1341) umfasst, die aus einer Gruppe ausgewählt ist, die aus einem Berührungsbedienungsmonitor, einem Anzeigemonitor, einem numerischen Monitor und Anzeigeleuchten oder einer Kombination davon besteht.

10. Staubsammelvorrichtung (100) nach Anspruch 1, bei welcher das Leistungsmodul (133) einen externen Stromanschluss, eine Einmalbatterie, eine wiederaufladbare Batterie oder eine Kombination davon umfasst, und/oder wobei ein Batteriefach durch das seitliche Ende, das obere Ende oder das untere Ende des Gehäuses (11) gebildet wird und das Batteriefach eine Schlitzöffnung am Ende des Batteriefachs umfasst, so dass die Batterie durch die Schlitzöffnung aus dem Batteriefach entnommen werden kann.

11. Staubsammelvorrichtung (100) nach Anspruch 8, bei welcher das Steuermodul (132) ferner (a) ein Erfassungsmodul und (b) eine mit dem Erfassungsmodul verbundene Warnvorrichtung umfasst, wobei das Erfassungsmodul mindestens einen der folgenden Zustände erfasst:
(1) einen Benutzungszustand des Filters (12), so dass, wenn das Erfassungsmodul feststellt, dass der Benutzungszustand des Filters (12) einen Schwellenwert über- oder unterschreitet, das Erfassungsmodul eine Nachricht an die Anzeigeeinheit (1341) oder an die Warnvorrichtung sendet, um einen Hinweis zum Filterwechsel anzuzeigen;
(2) einen Zustand des Luftstromerzeugungsmoduls (13), so dass, wenn das Erfassungsmodul feststellt, dass das Luftstromerzeugungsmodul (13) nicht normal betrieben wird, das Erfassungsmodul eine Nachricht an die Anzeigeeinheit (1341) oder die Warnvorrichtung überträgt;
(3) einen Zustand des Leistungsmoduls (133), so dass, wenn das Erfassungsmodul feststellt, dass der Stromversorgungszustand für die Staubsammelvorrichtung (100) niedrig ist, das Leistungsmodul (133) nicht ordnungsgemäß angeschlossen ist oder eine anormale Stromversorgung vorliegt, das Erfassungsmodul eine Nachricht an die Anzeigeeinheit (1341) oder die Warnvorrichtung sendet.

12. Staubsammelvorrichtung (100) nach Anspruch 11, bei welcher die Warnvorrichtung aus der Gruppe bestehend aus einem Summer, einem Lautsprecher und einer Anzeigeleuchte ausgewählt ist.

13. Staubsammelvorrichtung (100) nach Anspruch 1, bei welcher das Gehäuse (11) eine äußere Abdeckung umfasst, die abnehmbar an einer Außenseite der Einlassöffnung (1111) angebracht ist, und/oder wobei das Gehäuse (11) einen Griff umfasst, der an einer Außenseite des Gehäuses (11) angeordnet ist.

14. Staubsammelvorrichtung (100) nach Anspruch 1, bei welcher die Einlassöffnung (1111) des Gehäuses (11) eine weiche Unterlage umfasst, die an einer benachbarten Seite davon angeordnet und zum Auflegen der Hand darauf vorgesehen ist.

15. Staubsammelvorrichtung (100) nach Anspruch 1, bei welcher das Gehäuse (11) mindestens ein an einem unteren Ende des Gehäuses (11) angeordnetes Fußpolster (115) aufweist und / oder
wobei das Gehäuse (11) mindestens einen Ständer aufweist oder das Gehäuse (11) einen Neigungswinkel aufweist.

16. Staubsammelvorrichtung (100) nach Anspruch 1, bei welcher das Gehäuse (11) ein lichtstreuendes Material umfasst und eine Vielzahl von Leuchtdioden in der Innenseite des Gehäuses (11) installiert ist, wobei das von der Vielzahl von Leuchtdioden emittierte Licht auf eine Oberfläche des lichtstreuenden Materials trifft.

17. Staubsammelvorrichtung (100) nach Anspruch 1, die ferner einen USB-Ausgangsanschluss aufweist, der elektronisch mit dem Leistungsmodul (133) verbunden ist, und / oder
eine Lichteinheit aufweist oder ferner mit einer Nagelbohrmaschine kombiniert werden kann, und / oder
wobei die Außenfläche des Gehäuses (11) eine Vielzahl von Löchern aufweist und / oder
die Staubsammelvorrichtung (100) in einen Tisch eingebettet ist.

## Revendications

1. Appareil de collecte de poussière (100), comprenant :
un boîtier (11), présentant un côté formé d'au moins un trou d'évent d'admission (1111) et un autre côté formé d'au moins un trou d'évent d'évacuation (1141), un côté intérieur du boîtier (11) présentant un canal de flux d'air formé entre le trou d'évent d'admission (1111) et le trou d'évent d'évacuation (1141) ;
un module de génération de flux d'air (13), comprenant :
au moins une unité de tirage de flux d'air (131) pour tirer un flux d'air afin de former le canal de flux d'air entre le trou d'évent d'admission (1111) et le trou d'évent d'évacuation (1141), l'unité de tirage de flux d'air (131) présentant une extrémité d'admission pour aspirer de l'air et une extrémité d'évacuation pour évacuer l'air ;
un module de commande (132) électriquement raccordé à l'unité de tirage de flux d'air (131), le module de commande (132) comprenant un panneau de commande pour commander l'unité de tirage de flux d'air (131) ; et
un module de puissance (133) électriquement raccordé au module de commande (132) ; et
au moins un filtre (12) agencé de manière détachable au niveau de l'extrémité d'admission et utilisé pour filtrer de la poussière dans l'air aspiré par l'unité de tirage de flux d'air (131) ;
**caractérisé en ce que**
le module de génération de flux d'air (13) comprend en outre une unité de tirage de guidage de flux d'air (135) agencée de manière correspondante au niveau de l'extrémité d'évacuation de l'unité de tirage de flux d'air (131), dans lequel l'unité de tirage de guidage de flux d'air (135) inclut une surface de guidage incurvée pour guider le flux d'air.

2. Appareil de collecte de poussière selon la revendication 1, dans lequel le boîtier (11) reçoit le module de génération de flux d'air (13), et l'extrémité latérale et/ou l'extrémité inférieure du boîtier (11) est formée d'au moins un trou d'évent d'évacuation (1141).

3. Appareil de collecte de poussière (100) selon la revendication 1, dans lequel l'unité de tirage de guidage de flux d'air (135) guide l'air dans le canal de flux d'air dans le au moins un trou d'évent d'évacuation (1141).

4. Appareil de collecte de poussière (100) selon la revendication 1, qui comprend en outre une couche de support (112) installée au niveau de l'extrémité d'admission de l'unité de tirage de guidage de flux d'air (135), et les trous d'évent d'admission (1111, 1121) sont formés sur celle-ci ; et le filtre (12) est placé entre le boîtier (11) et la couche de support (112).

5. Appareil de collecte de poussière (100) selon la revendication 4, dans lequel le filtre (12) est un filtre sélectionné à partir d'un groupe consistant en une couche d'absorption, une couche de filtre, une couche de sédimentation, une couche de catalyseur chimique, une couche de photocatalyseur, une couche électrostatique, une couche d'ionisation ou une combinaison de celles-ci.

6. Appareil de collecte de poussière (100) selon la revendication 5, dans lequel le boîtier (11) comprend un élément de positionnement (113) pour positionner le filtre (12), et l'élément de positionnement (113) comprend une structure de joint tenon et mortaise, une structure de loquet, une structure d'engagement de verrouillage, une structure de restriction d'espace, une structure d'attraction magnétique, une structure de ressort, une structure de feuille élastique, une structure de fixation par vis, un capteur ou une combinaison de ceux-ci, et/ou dans lequel le boîtier (11) comprend en outre une lampe de stérilisation, particulièrement une ampoule LED UVB ou une ampoule LED UVC.

7. Appareil de collecte de poussière (100) selon la revendication 6, dans lequel le boîtier (11) présente une ouverture latérale au niveau de l'extrémité latérale de sorte que le filtre (12) est pris depuis l'ouverture latérale sans démonter le boîtier (11) et/ou dans lequel l'élément de positionnement (113) est un capteur comprenant une unité de détection électriquement raccordée au module de commande (132) pour détecter un statut d'installation du filtre (12).

8. Appareil de collecte de poussière (100) selon la revendication 6, dans lequel le module de génération de flux d'air (13) comprend un module de fonctionnement (134) électriquement raccordé au module de commande (132) et est utilisé pour commander l'état d'utilisation de l'unité de tirage de flux d'air (131).

9. Appareil de collecte de poussière (100) selon la revendication 8, dans lequel le module de fonctionnement (134) comprend une interface de fonctionnement pour ajuster une vitesse du vent et un commutateur marche/arrêt de l'unité de tirage de flux d'air (131), dans lequel l'interface de fonctionnement est de préférence une touche de fonctionnement, une pédale de fonctionnement, un bouton de fonctionnement, un bouton de réglage, une résistance variable, un panneau de fonctionnement, un écran tactile ou une combinaison de ceux-ci, et/ou dans lequel le module de fonctionnement (134) comprend une unité d'affichage (1341) sélectionnée à partir d'un groupe consistant en un moniteur à commande tactile, un moniteur d'affichage, un moniteur numérique et des témoins lumineux ou une combinaison de ceux-ci.

10. Appareil de collecte de poussière (100) selon la revendication 1, dans lequel le module de puissance (133) comprend l'un quelconque parmi un port d'alimentation externe, une batterie à usage unique, une batterie rechargeable ou une combinaison de ceux-ci, et/ou
dans lequel un compartiment de batterie est formé par l'extrémité latérale, l'extrémité supérieure ou l'extrémité inférieure du boîtier (11), et le compartiment de batterie comprend une ouverture à fente au niveau de l'extrémité du compartiment de batterie, de sorte que la batterie puisse être retirée du compartiment de batterie par le biais de l'ouverture à fente.

11. Appareil de collecte de poussière (100) selon la revendication 8, dans lequel le module de commande (132) comprend en outre (a) un module de détection et (b) un dispositif d'avertissement raccordé au module de détection ; dans lequel le module de détection détecte au moins l'un des états suivants :
(1) un état d'utilisation du filtre (12), de sorte que, lorsque le module de détection détecte que l'état d'utilisation du filtre (12) dépasse ou n'atteint pas une valeur seuil, le module de détection transmet un message à l'unité d'affichage (1341) ou au dispositif d'avertissement afin d'afficher une notification pour un remplacement de filtre ;
(2) un état du module de génération de flux d'air (13), de sorte que, lorsque le module de détection détecte que le module de génération de flux d'air (13) ne fonctionne pas normalement, le module de détection transmet un message à l'unité d'affichage (1341) ou au dispositif d'avertissement ;
(3) un état du module de puissance (133), de sorte que, lorsque le module de détection détecte que l'état de puissance pour l'appareil de collecte de poussière (100) est faible, que le module de puissance (133) n'est pas raccordé correctement ou qu'il y a une alimentation électrique anormale, le module de détection transmet un message à l'unité d'affichage (1341) ou au dispositif d'avertissement.

12. Appareil de collecte de poussière (100) selon la revendication 11, dans lequel le dispositif d'avertissement est sélectionné à partir du groupe consistant en une alarme, un haut-parleur et un témoin lumineux.

13. Appareil de collecte de poussière (100) selon la revendication 1, dans lequel le boîtier (11) comprend un couvercle extérieur installé de manière détachable à l'extérieur du trou d'évent d'admission (1111) et/ou dans lequel le boîtier (11) comprend une poignée agencée au niveau d'un côté extérieur du boîtier (11).

14. Appareil de collecte de poussière (100) selon la revendication 1, dans lequel le trou d'évent d'admission (1111) du boîtier (11) comprend un coussinet doux agencé au niveau d'un côté adjacent de celui-ci et fourni pour reposer sa main sur celui-ci.

15. Appareil de collecte de poussière (100) selon la revendication 1, dans lequel le boîtier (11) comprend au moins un pied (115) agencé au niveau d'une extrémité inférieure du boîtier (11) et/ou
dans lequel le boîtier (11) comprend au moins un socle ou le boîtier (11) présente un angle d'inclinaison.

16. Appareil de collecte de poussière (100) selon la revendication 1, dans lequel le boîtier (11) comprend un matériau diffusant de la lumière ; et une pluralité de diodes électroluminescentes sont installées au niveau du côté intérieur du boîtier (11) ; de la lumière émise par la pluralité de diodes électroluminescentes frappant une surface du matériau diffusant de la lumière.

17. Appareil de collecte de poussière (100) selon la revendication 1, qui présente en outre un connecteur de sortie USB raccordé électroniquement au module de puissance (133) et/ou
présente une unité de lumière ou est en outre combiné à une perceuse à clous, et/ou
dans lequel la surface extérieure du boîtier (11) présente une pluralité de trous et/ou
l'appareil de collecte de poussière (100) est intégré dans une table.
